# EUROPÄISCHE PATENTANMELDUNG

(11) **EP 1 621 409 A2**
(43) Veröffentlichungstag der Anmeldung: **01.02.2006**
(21) Anmeldenummer: 05012714.1
(22) Anmeldetag: 14.06.2005
(51) Int. Cl.: B60R 16/02, B60Q 1/32, B60Q 11/00

(54) **Beleuchtungsanordnung eines Lastfahrzeugs, insbesondere eines Anhängers, sowie Kabelverbinder hierfür**

(30) Priorität: 27.07.2004 DE 102004036341
(71) Anmelder: Schmitz Gotha Fahrzeugwerke GmbH, 99867 Gotha (DE)
(72) Erfinder: Koch, Josef, 89081 Ulm (DE)
(74) Vertreter: Weber, Gerhard

(57) **Zusammenfassung**

Für eine Beleuchtungsanordnung eines Lastfahrzeugs, insbesondere eines Anhängers, mit einer Heckleuchtenanordnung (HA) mit mehreren Beleuchtungsmodulen und einer frontseitigen Steuereinrichtung (SE) werden Leitungsführungen mit mehradrigen Verbindungskabeln (VLL,VLR) zwischen Steuereinrichtungen (SE) und Heckleuchtenanordnung (HA) beschrieben, bei welchen an die Verbindungskabel (VLL,VLR) unterbrechungsfrei weitere Beleuchtungseinrichtungen (ML) angeschlossen sind.

## Beschreibung

Die Erfindung betrifft eine Beleuchtungsanordnung eines Lastfahrzeugs, insbesondere eines Anhängers, sowie Kabelverbinder hierfür.

Beleuchtungsanordnungen an Lastfahrzeugen, insbesondere auch an Anhängern weisen häufig neben einer Heckleuchtenanordnung, welche insbesondere Rücklichter, Bremsleuchten, Kennzeichenbeleuchtung, sowie typischerweise noch Rückfahrscheinwerfer und Nebelschlussleuchten umfassen kann, noch weitere Leuchten, insbesondere an Ecken und entlang von Längsseiten als Markierungsleuchten und Spurhalteleuchten auf. Bei Anhängern erfolgt eine Steuerung und Leistungsversorgung typischerweise über eine in Fahrtrichtung vorne liegende mehrpolige lösbare elektrische Verbindung zu einem Zugfahrzeug. Eine typische Kabelführung sieht die Verwendung eines vieladrigen Hauptkabelstrangs vor, welcher sich im Bereich der Heckleuchtenanordnung in mehrere Teilstränge zu mehreren Leuchtengehäusen auftrennt und aus welchem zweiadrige Kabel entlang der beidseitigen Längsseiten des Fahrzeugs zum Anschluss der seitlichen Markierungsleuchten in Fahrtrichtung nach vorne geführt sind. Der Haufkabelstrang kann zu einem Verteilergehäuse im Heckbereich führen, von welchem getrennte mehradrige Kabel zu den verschiedenen Leuchtengehäusen abgehen.

Der vorliegenden Erfindung liegt die Aufgabe zugrunde, eine vorteilhafte derartige Beleuchtungsanordnung, insbesondere für Anhänger, sowie Kabelverbinder hierfür anzugeben.

Erfindungsgemäße Lösungen sind in den unabhängigen Ansprüchen beschrieben. Die abhängigen Ansprüche enthalten vorteilhafte Ausgestaltungen und Weiterbildungen der Erfindung.

Die unterbrechungsfreie Durchführung eines Verbindungskabels zwischen frontseitiger elektrischer Leistungsquelle und heckseitiger Heckleuchtenanordnung und der Anschluss weiterer elektrischer Verbraucher an dieses Kabel in dessen Verlauf zwischen der Steuereinrichtung und der Heckleuchtenanordnung ohne aber das Verbindungskabel zu unterbrechen, führt zu einer besonders einfachen und montagefreundlichen und somit auch kostengünstigen Anordnung. Der Anschluss der weiteren Verbraucher erfolgt dadurch an ein Verbindungskabel, welches mehr als die für die weiteren Verbraucher erforderlichen getrennten Adern aufweist. Vorzugsweise sind die weiteren Verbraucher funktional mit wenigstens einer Beleuchtungsfunktion der Heckleuchtenanordnung gekoppelt und mit den dieser Beleuchtungsfunktion zugeordneten Adern elektrisch verbunden.

Vorzugsweise erfolgt der Anschluss weiterer Verbraucher an das Verbindungskabel mittels die Isolierung des Kabels durchdringender Kontaktspitzen, Kontaktschneiden oder dergleichen. Kontaktvorrichtungen dieser Art sind an sich aus der elektrischen Verbindungstechnik in großer Zahl bekannt. Derartige Kontaktvorrichtungen können mit geringem Aufwand wasserdicht ausgeführt werden.

Das Verbindungskabel weist vorteilhafterweise in nicht rotationssymmetrischem Querschnitt eine Mehrzahl getrennter Adern in definierter relativer Position zur Querschnittsform auf.

Das Verbindungskabel enthält vorteilhafterweise alle zur Steuerung der voneinander unabhängigen Beleuchtungsfunktionen Rücklicht, Bremslicht, beide Blinker sowie Rückfahrscheinwerfer und/oder Nebelschlussleuchte erforderlichen getrennten Adern, wobei bei Aufteilung des Verbindungskabels in zwei insbesondere seitlich voneinander beabstandet geführte Teilkabel diese seitlich voneinander beabstandet geführte Teilkabel diese Beleuchtungsfunktionen teilweise auf die Adern der beiden Teilkabel verteilt sein können. Eine Kennzeichenbeleuchtung ist in der Regel gemeinsam mit der Rücklichtfunktion betrieben und kann daher aus denselben Kabeladern wie diese gespeist sein. Für getrennte, aber gleichzeitig betriebene Leuchten, wie rechtes und linkes Rücklicht und Kennzeichenbeleuchtung oder rechtes und linkes Bremslicht kann jeweils vorteilhafterweise nur eine gemeinsame Ader in dem Verbindungskabel vorgesehen sein. Das Verbindungskabel bzw. die Teilkabel sind vorteilhafterweise über wenigstens 80 %, insbesondere wenigstens 90 % der Länge des Fahrzeugs zwischen frontseitiger Steuereinrichtung und Heckleuchtenanordnung ununterbrochen durchgehend.

Das Verbindungskabel kann mit frontseitigen und heckseitigen Anschlüssen als Montagebaugruppe zum Einbau vorbereitet sein. Besonders vorteilhaft ist eine bevorzugte Anordnung, bei welcher das Verbindungskabel auch an die Heckleuchtenanordnung und/oder an eine frontseitige Steuereinrichtung über die Isolierung durchdringende Kontaktspitzen, Kontaktschneiden etc. angeschlossen ist. Es kann dann vorteilhafterweise ein von einem Strang in der jeweils im Einzelfall benötigten Länge abgetrenntes Kabelstück als Verbindungskabel eingesetzt und für verschiedene Fahrzeuggeometrien ein einheitlicher Kabelquerschnitt vorgehalten werden. Das Verbindungskabel kann in anderer vorteilhafter Ausführungsform mit frontseitiger Steuereinrichtung oder mit einem Leuchtengehäuse der Heckleuchtenanordnung verbunden, insbesondere auch mit angelöteten Kabeladern als Montagebaugruppe vorgefertigt sein. Das Verbindungskabel kann dann an seinem der vrebundenen Steuereinrichtung bzw. den verbundenen Leuchtengehäuse abgewandten Ende ein für einfaches Kabeleinziehen freies Kabelende ohne Anschlussteile aufweisen und an dem freien Ende über Kontaktvorrichtungen mit die Kabelisolierung durchdringenden Spitzen oder Schneiden an weiterführende Kabel oder an Leuchtengehäuse angeschlossen werden.

Der Anschluss weiterer Verbraucher kann unter Zwischenfügung weiterer Kabelabschnitte oder direkt erfolgen.

Bei einer Anschlussvariante der weiteren Verbraucher über weitere Kabelabschnitte sind diese über Kontaktvorrichtungen mit Kontaktspitzen an ein oder mehrere Adern des mehradrigen Verbindungskabels angeschlossen. Die weiteren Kabelabschnitte können vom selben Kabeltyp sein wie das Verbindungskabel, so dass insgesamt nur ein Kabeltyp Verwendung findet. Die Kontaktvorrichtungen können dann insbesondere auch Verbindungen zwischen allen Adern des Verbindungskabels und allen entsprechenden Adern der weiteren Kabelabschnitte herstellen und dadurch unabhängig von der Art der weiteren Verbraucher universell eingesetzt werden. In anderer vorteilhafter Ausführung können die weiteren Kabelabschnitte von anderem Kabeltyp sein als das Verbindungskabel und insbesondere eine geringere Anzahl von Adern aufweisen. Die weiteren Kabelabschnitte können zu jeweils einem einzigen oder zu mehreren weiteren entlang des Kabelabschnitts beabstandet aufeinanderfolgend angeschlossenen Verbrauchern führen.

Die Anschlussstellen können als T-Verzweigungen mit einem einseitig vom Verbindungskabel weg führenden weiteren Kabelabschnitt oder als Kabelkreuzungen des Verbindungskabels mit zwei abführenden weiteren Kabelabschnitten ausgeführt sein. In letzterem Fall sind vorteilhafterweise die beiden weiteren Kabelabschnitte untereinander als ein Kabel ununterbrochen durchgehend ausgeführt und gleichfalls über Kontaktspitzen etc. mit der Anschlussvorrichtung kontaktiert.

Bei direktem unterbrechungsfreiem Anschluss eines oder mehrerer weiterer Verbraucher an das zwischen frontseitiger Steuereinrichtung und heckseitiger Heckleuchtenanordnung verlaufende Verbindungskabel sind die weiteren Verbraucher vorteilhafterweise mit einer integrierten Kontaktvorrichtung ausgestattet oder mit einer Kontaktvorrichtung mechanisch und elektrisch verbunden. Insbesondere in letzterem Falle kann die Kontaktvorrichtung auch mehr Adern des Verbindungskabels kontaktieren als für den jeweiligen Verbraucher erforderlich, so dass dieselbe Ausführung einer Kontaktvorrichtung universell für mehrere oder alle Arten weiterer Verbraucher einsetzbar ist.

Weitere Verbraucher können insbesondere an Ecken und/oder entlang von Längsseiten angeordnete Markierungsleuchten, Spurhalteleuchten oder Umrissleuchten sein. Als weitere Verbraucher kommen aber auch andere elektrische Einheiten, welche keine Beleuchtungsfunktion haben, in Betracht, insbesondere Sensoren zur Überwachung oder Aktoren zur Steuerung von Betriebszuständen einzelner Komponenten des Lastfahrzeugs, beispielsweise Komponenten eines hydraulischen oder pneumatischen Systems oder damit zusammenhängende Bauteile, wie Relais oder dergleichen. Dabei können auch mehrere unterschiedliche Verbraucher über eine oder mehrere gemeinsame Adern des Verbindungskabels mittels codierter, insbesondere digital codierter Signale individuell adressierbar sein. Die anderen elektrischen Einheiten sind in bevorzugter Ausführung aber über ein separates elektrisches Leitungssystem mit einem Zugfahrzeug verbunden. Bei der Beleuchtungsanorndung ist vorteilhafterweise für jede unabhängige Beleuchtungsfunktion ein eigener, auch separat gegen Überstrom abgesicherter Stromkreis vorhanden. Besonders leistungsintensive Beleuchtungsfunktionsgruppen, wie die Gruppe aus Rücklichtern, Kennzeichenbeleuchtung, Umrissleuchten, Spurhalteleuchten und Seitenmarkierungsleuchten können in an sich üblicher Weise in gleichzeitig geschaltete Teilgruppen mit eigenen Stromkreisen aufgeteilt sein. Die mehreren Stromkreise weisen vorzugsweise eine gemeinsame elektrische Masse als Referenzpotential und eine gemeinsame Masseleitung auf.

Die frontseitige Leistungsquelle eines Anhängers kann im einfachsten Fall eine Steckverbindung zum Zugfahrzeug sein, über welche die elektrische Leistungsversorgung und gegebenenfalls alle Steuersignale mit direkter Zuordnung der einzelnen Steckkontakte zu den einzelnen Adern des Verbindungskabels erfolgt. Vorzugsweise kann die frontseitige Leistungsquelle eines Anhängers eine Steuereinrichtung mit eigenen elektrischen und elektronischen Schaltungen, beispielsweise Leistungsverzweigungen, Sicherungen, Überwachungseinrichtungen, Schalter, Spannungswandler etc. enthalten. In vorteilhafter Ausführung kann ein Anhänger auch eine eigene Energiequelle in Form eines Akkus enthalten. Die Aufladung eines solchen Akkus kann über die Zuleitung des ZugFahrzeugs, über einen anhängerseitigen Generator oder über photovoltaische Elemente erfolgen. Die Steuereinrichtung kann ferner zur drahtlosen Signalverbindung mit einem Zugfahrzeug ausgebildet sein. Die Steuereinrichtung kann für die Beleuchtungsanordnung und gegebenenfalls vorhandene andere elektrische Einheiten in einem einheitlichen Gehäuse gemeinsam genutzt sein.

Eine erfindungsgemäße Beleuchtungsanordnung kann gemäß einer ersten vorteilhaften Ausführungsform ein von beiden gegenüber liegenden Längsseiten beabstandetes, vorzugsweise um wenigstens 10 %, insbesondere wenigstens 20 % der Fahrzeugbreite beabstandetes zentrales Verbindungskabel zwischen frontseitiger Leistungsquelle und heckseitiger Beleuchtungsanordnung mit über weitere Kabelabschnitte im Verlauf des Verbindungskabels angeschlossenen weiteren Verbrauchern aufweisen. Eine solche Anordnung weist eine besonders geringe Länge des Verbindungskabels auf, welches besonders geschützt geführt werden kann. Bei längenveränderbaren Anhängern braucht dann vorteilhafterweise nur das zentrale Verbindungskabel der Längenveränderung folgend geführt sein. Weitere Verbraucher können vorzugsweise über quer zur Fahrtrichtung von dem Verbindungskabel abzweigende weitere Kabelabschnitte angeschlossen sein.

In anderer besonders vorteilhafter Ausführung sind zwei Teil-Verbindungskabel zwischen frontseitiger Leistungsquelle und heckseitiger Beleuchtungsanordnung entlang beider Längsseiten des Lastfahrzeugs vorgesehen. Seitliche Markierungsleuchten können direkt an eines der beiden Teil-Verbindungskabel über die erwähnten Kontaktvorrichtungen ohne Zwischenfügen weiterer Kabelabschnitte angeschlossen sein. Die beiden Teil-Verbindungskabel sind an jeweils eigenen Anschlussstellen mit der Heckleuchtenanordnung kontaktiert. Die beiden Teil-Verbindungskabel können jeweils Teile der Heckleuchtenanordnung versorgen. Vorzugsweise sind beide Verbindungskabel vom identischen Kabeltyp. In besonders vorteilhafter Ausführung ist wenigstens ein Teil der Adern der beiden Verbindungskabel, vorzugsweise alle Adern mit gleichen Funktionen belegt und innerhalb der Heckleuchtenanordnung können dann die mit identischen Funktionen belegten Adern der beiden Verbindungskabel durchkontaktiert sein und in sich geschlossene Leiterschleifen bilden. Eine Versorgung der angeschlossenen Verbraucher kann dann von zwei Seiten erfolgen. Auch bei einer Unterbrechung der Leiterschleife einer auf diese Art durch die Heckleuchtenanordnung durchkontaktierten Ader an beliebiger Stelle einer der beiden Verbindungskabel oder innerhalb der Heckleuchtenanordnung ist dadurch unverändert die Funktion aller angeschlossener Verbraucher gegeben. In vorteilhafter Weiterbildung kann vorgesehen sein, dass in der frontseitigen Steuereinrichtung Überwachungseinrichtungen vorgesehen sind, welche, vorzugsweise in regelmäßigen Zeitabständen, die Unversehrtheit solcher geschlossener Leiterschleifen überprüfen und bei festgestellter Schleifenunterbrechung ein entsprechendes Fehlersignal erzeugen, welches bei einem Anhänger als Lastfahrzeug vorteilhafterweise zum Zugfahrzeug übertragen und dort akustisch oder optisch angezeigt wird.

Die fehlertolerante Betriebsart durch die geschlossenen Leiterschleifen mit zwei Verbindungskabeln gleicher Funktionsbelegung der Adern beider Verbindungskabel kann teilweise auch bei zentraler Kabelführung mit zwei gleichen Teil-Verbindungskabeln oder mit einem Verbindungskabel mit doppelter Anzahl von Adern erreicht werden. Die Anordnung mit zwei entlang der beiden Fahrzeuglängsseiten geführten Verbindungskabeln ist durch die direkte Anschlussmöglichkeit der seitlichen Markierungsleuchten besonders vorteilhaft. Zwei Teil-Verbindungskabel können auch seitlich voneinander und von den seitlichen Markierungsleuchten beabstandet, z. B. um wenigstens 10 %, insbesondere wenigstens 20 % der Fahrzeugbreite, geführt sein, beispielsweise entlang von Längsträgern eines Fahrzeugchassis.

In wieder anderer Ausführungsform kann ein einziges Verbindungskabel auch alternierend zwischen gegenüberliegenden Längsseiten des Lastfahrzeugs in Mäanderform verlegt sein und dabei in durchgehender ununterbrochener Form Verbraucher an beiden Längsseiten direkt kontaktieren. Die verschiedenen Ausführungen des Verlaufs des Verbindungskabels und gegebenenfalls der weiteren Kabelabschnitte können auch untereinander kombiniert auftreten.

In bevorzugter Ausführungsform führt zwischen frontseitiger Steuereinrichtung und Heckleuchtenanordnung in Längsrichtung nur ein Verbindungskabel mit Adern für Ansteuerung und Leistungsversorgung aller unabhängigen Beleuchtungsfunktionen. Das Verbindungskabel kann ohne Unterbrechung zu einem Kabelanschluss der Heckleuchtenanordnung geführt sein. Weitere Kabelanschlüsse der Heckleuchtenanordnung können über Zwischenkabel, welche an das Verbindungskabel oder ein Zwischenkabel angeschlossen sind, elektrisch versorgt sein, wobei der Anschluss der Zwischenkabel an das Verbindungskabel vorzugsweise wieder über Kontaktspitzen ohne Unterbrechung des Verbindungskabels erfolgt. Es können auch alle Kabelanschlüsse der Heckleuchtenanordnung über solche Zwischenkabel an das Verbindungskabel angeschlossen sein, wobei die Leuchtengehäuse mit solchen Zwischenkabeln als Anschlusskabeln ausgestattet vorbereitet sein können, insbesondere auch mit angelöteten Kabeladern in den LeuchtenanordnungenVorteilhafterweise sind zumindest einige, vorzugsweise alle der einzelnen Leuchten mit lichtemittierenden Dioden als Lichtquellen ausgestattet. Hierdurch kann für gleiche Lichtleistung ein geringerer Betriebsstrom ausreichen als für Glühlampen, wodurch wiederum vorteilhaft der Leitungsquerschnitt der einzelnen Adern reduziert werden kann. Der Leitungsquerschnitt der Adern liegt vorteilhafterweise im Bereich von 0,5 mm² bis 1,25 mm², vorzugsweise bei 1 mm².

Die Erfindung ist nachfolgend anhand besonders vorteilhafter Ausführungsbeispiele noch eingehend veranschaulicht. Dabei zeigt:
- Fig. 1: eine Schrägansicht einer bevorzugten Ausführungsform mit zwei Teil-Verbindungskabeln,

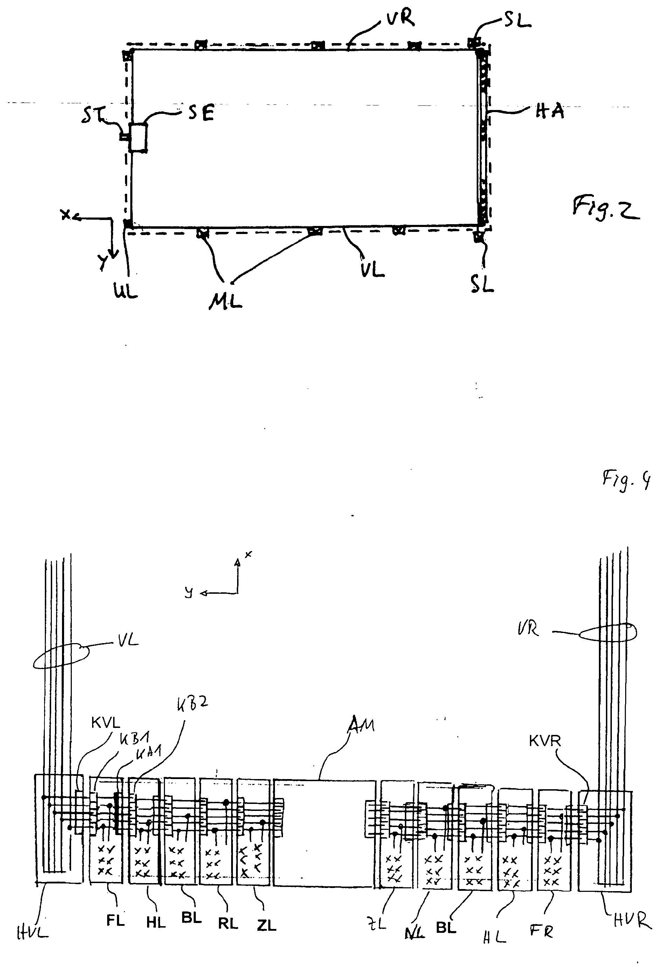

- Fig. 2: ein Kabelführungsschema zu Fig. 1 in Draufsicht,
- Fig. 3: ein erstes Leitungsschema zu Fig. 2 mit Testfunktion,
- Fig. 4: ein zweites Leitungsschema mit zwei Teil-Verbindungskabeln nach Fig. 2 ,
- Fig. 5: ein Kabelführungsschema mit zwei voneinander und von den Längsseiten des Fahrzeugs beabstandeten Teil-Verbindungskabeln,
- Fig. 6: ein Kabelführungsschema mit nur einem Verbindungskabel und Kabelkreuzungen,
- Fig. 7: ein Kabelschema mit einem mäanderförmig verlegten Verbindungskabel,
- Fig. 8: ein Kabelschema mit einem mittigen Verbindungskabel und dreiteiliger Heckleuchtenanordnung,
- Fig. 9: ein Kabelschema mit nur einem außermittigen Verbindungskabel.
- Fig. 10: ein Querschnitt eines bevorzugten Kabels,
- Fig. 11: eine Explosionszeichnung einer bevorzugten Ausführung eines Kabelverbinders,
- Fig. 12: eine Zusammenbauzeichnung eines zweiteiligen Kabelverbinders mit Kabeln,
- Fig. 13: eine Variante für die Verbindung verschiedener Kabel,
- Fig. 14: eine Heckleuchtenanordnung mit zwei Platinen,
- Fig. 15: ein Leitungsschema zu einer Heckleuchtenanordnung nach Fig. 14

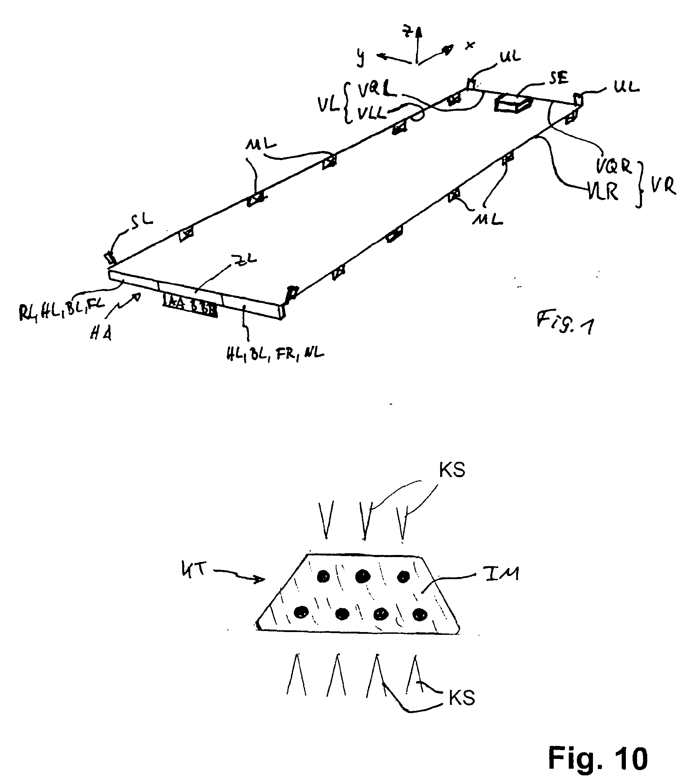

In Fig. 1 ist in Schrägansicht mit einem rechtwinkligen x, y, z Koordinatensystem eine Beleuchtungsanordnung eines Anhängers als Lastfahrzeug skizziert. Die Beleuchtungsanordnung enthält insbesondere als lichtemittierende elektrische Verbraucher eine heckseitige Heckleuchtenanordnung HA, an den hinteren Ecken des Fahrzeugs Spurhalteleuchten SL und entlang der Längsseiten mehrere in Reihen angeordnete seitliche Markierungsleuchten ML und eventuell zusätzlich vordere und/oder hintere Umrissleuchten UL, welche insbesondere bei Kofferaufbauten auch hochgesetzt angeordnet sein können. Die Heckleuchtenanordnung kann in an sich bekannter Weise Rücklichter HL, rechte und linke Bremslichter BL, Rückfahrscheinwerfer RL, Nebelschlussleuchten NL, eine Kennzeichenbeleuchtung ZL und linke Blinkleuchten FL und rechte Blinkleuchten FR enthalten. Dabei sind typischerweise, aber nicht notwendigerweise, Rücklichter HL, Kennzeichenbeleuchtung ZL, Umrissleuchten UL, Spurhalteleuchten SL und Markierungsleuchten ML gemeinsam in Betrieb und in einem gemeinsam abgesicherten Stromkreis angeschlossen. Gemäß einer bevorzugten Ausführung sind alle Leuchten durch Leuchtdiodengruppen gebildet.

In Fahrtrichtung x vorne liegend ist eine Steuereinrichtung SE vorgesehen. Zwischen der Steuereinrichtung SE und der Heckleuchtenanordnung HA verläuft enthalt der linken Längsseite des Fahrzeugs ein linkes Teil-Verbindungskabel VL und entlang der rechten Längsseite des Fahrzeugs ein rechtes Teil-Verbindungskabel VR. Im Bereich der Umrissleuchten UL sind die Verbindungskabel in Richtung der Fahrzeugmitte zu der Steuereinrichtung umgelenkt. Die Verbindungskabel sind mehradrig ausgeführt.

Wenigstens einige, vorzugsweise alle der die Markierungsleuchten ML sind an den entlang der Fahrzeuglängsseiten geführten Teil-Verbindungskabel VR, VL an diese angeschlossen, ohne die Verbindungskabel zu unterbrechen. Die einzelnen Markierungsleuchten, welche entlang der Verbindungskabel voneinander beabstandet sind, weisen hierfür vorteilhafterweise Kontaktvorrichtungen auf, welche mit Kontaktspitzen oder Kontaktschneiden die lsolierung der Verbindungskabel durchdringen und jeweils eine einzelne Ader kontaktieren. Derartige Kontaktvorrichtungen sind an sich bekannt und gebräuchlich und daher an dieser Stelle nicht im Detail beschrieben. Die Kabel weisen hierfür eine innerhalb des nicht rotationssymmetrischen Kabelquerschnitts definierte Lage der einzelnen Adern und die Kontaktvorrichtungen entsprechend definierte Positionen von Kontaktspitzen bzw. Kontaktschneiden auf. Für die Kontaktvorrichtungen der Markierungsleuchten sind im Regelfall nur jeweils zwei Adern des Kabels zu kontaktieren, welche auch für den gemeinsamen Betrieb von Rückleuchten und Kennzeichenbeleuchtung dienen. Die Verbindungskabel VL, VR enthalten aber weitere Adern zur getrennten Ansteuerung von Beleuchtungsfunktionen der Heckleuchtenanordnung, insbesondere der Bremslichter, der Blinklichter, der Rückfahrscheinwerfer und der Nebelschlussleuchten und gegebenenfalls weiterer elektrischer Verbraucher.

Eine der Kabeladern der Verbindungskabel kann als auf gemeinsamem Bezugspotential liegende Masse-Ader für mehrere oder alle elektrischen Verbraucher der Beleuchtungsanordnung dienen. Die vorderen Umrissleuchten UL sind vorzugsweise gleichfalls an die Verbindungskabel angeschlossen, ohne diese oder einzelne Adern derselben zu unterbrechen, so dass die zumindest überwiegend längs in x-Richtung bzw. quer in y-Richtung verlaufenden Verbindungskabelabschnitte VLL und VQL bzw. VLR und VQR jeweils von der Steuereinrichtung SE zur Heckleuchtenanordnung durchgehende Kabelstränge bilden. In anderer Ausführung können die Verbindungskabelabschnitte bei den Umrissleuchten UL unterbrochen und die quer verlaufenden Abschnitte VQL bzw. VQR mit den entlang der Längsseiten verlaufenden Abschnitte VLL bzw. VLR elektrisch über Verbindungsanordnungen verbunden sein. Hierdurch können die seitlichen Kabelstränge fortlaufend mit Markierungsleuchten bestückt als Rollenmaterial vorgefertigt sein und auf die im Einzelfall benötigte Länge abgetrennt werden. Beim Aufbau der Beleuchtungsanordnung entfällt dann die Bestückung der Verbindungskabel mit den Markierungsleuchten ML. Gegenüber der Ausführung mit quer und längs ununterbrochen durchgehenden Kabelsträngen wäre dann aber eine Verbindung der quer verlaufenden Abschnitte VQL bzw. VQR mit den längs verlaufenden Abschnitten VLL bzw. VLR vorzunehmen.

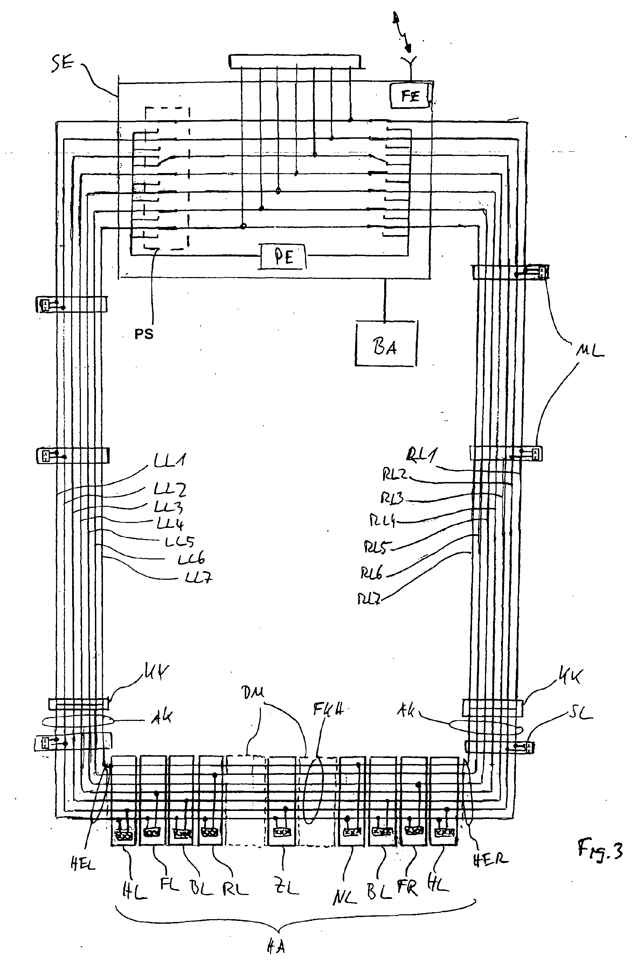

Der elektrische Anschluss der Heckleuchtenanordnung an die Verbindungskabel VL, VR erfolgt vorteilhafterweise wiederum über die Kabelisolierung durchdringende Kontakte in Form von Spitzen, Schneiden etc., wobei an solchen Verbindungspunkten vorzugsweise eine Kontaktierung aller Adern des Verbindungskabels innerhalb jeweils einer einzigen Kontaktvorrichtung erfolgt und eine elektrische Verbindung einzelner Adern mit zugeordneten unterschiedlichen Modulen oder Leuchtquellen der Heckleuchtenanordnung innerhalb derselben vorgenommen ist. Gemäß einer vorteilhaften Ausführung ist an der Heckleuchtenanordnung ein Anschlussabschnitt AK eines Kabels vorgesehen, welcher über eine Kupplung KK als Verbindungspunkt mit dem von der Steuereinrichtung nach hinten führenden Teil-Verbindungskabel VR bzw. VL elektrisch verbunden ist (Fig. 3). Das Anschlusskabel ist vorzugsweise in der Heckleuchtenanordnung mit seinen einzelnen Adern angelötet.

Gemäß einer vorteilhaften Ausführung mit einer geringen Anzahl von Adern der Teil-Verbindungskabel können die mehreren Funktionen der Heckleuchtenanordnung auf die beiden Teil-Verbindungskabel aufgeteilt sein, so dass z. B. neben einer gemeinsamen Masse-Ader und einer gemeinsamen Ader für Markierungsleuchten, Umrissleuchten, Spurleuchten, Kennzeichenbeleuchtung und Rücklichtern das linke Teil-Verbindungskabel weitere Adern für den Blinker links und einen Rückfahrscheinwerfer und das rechte Teil-Verbindungskabel VR weitere Adern für den Blinker rechts und eine Nebelschlussleuchte enthält. Mit je einer weiteren Ader in beiden Verbindungskabeln zum Betrieb von Bremsleuchten genügen damit Kabel mit fünf Adern je Teil-Verbindungskabel. Weitere Adern in den Verbindungskabeln für weitere Funktionen und/oder eine andere Funktionszuordnung zu den einzelnen Kabeln sind möglich.

Besonders vorteilhaft ist eine Ausführung, bei welcher wenigstens ein Teil der Adern der beiden Verbindungskabel gleichen Funktionen wie Adern im jeweils anderen Verbindungskabel zugeordnet sind und die Adern gleicher Funktion beider Verbindungskabel über leitende Verbindungen in der Heckleuchtenanordnung elektrisch miteinander verbunden und zu einer Leiterschleife geschlossen sind. Bei dem vorgenannten Beispiel kann dies ohne Erhöhung der Anzahl der Adern des Verbindungskabels z. B. für die Masse-Adern und für die den Rücklichtern und den Bremslichtern zugeordneten Adern der beiden Verbindungskabel vorgenommen werden. Vorzugsweise ist für jede der vorgesehenen Funktionen der Heckleuchtenanordnung in jedem der beiden Verbindungskabel eine getrennte Ader vorgesehen und alle der Adern gleicher Funktion in den beiden Verbindungskabeln sind über die Heckleuchtenanordnung als Leiterschleifen zu Ringleitungen geschlossen, was im genannten Beispiel mit lediglich zwei weiteren Adern, insgesamt also sieben Adern der Verbindungskabel erreichbar ist.

Die Verbindung korrespondierender Adern der beiden Verbindungskabel unter Bildung geschlossener Leiterschleifen hat den besonderen Vorteil, dass auch nach Unterbrechung einer solchen Leiterschleife an einer beliebigen Stelle, z. B. durch Funktionsausfall eines Kontaktes einer der Kontaktvorrichtungen, die Funktion der zugeordneten Beleuchtungseinrichtung der Anordnung voll erhalten bleibt, da an beiden Seiten der Unterbrechung dasselbe Potential anliegt.

Eine solche Unterbrechung kann auch auf einfache Weise detektiert und als Fehler angezeigt werden, so dass der Fahrer Gelegenheit hat, den Defekt bald zu beheben, wobei aber zwischenzeittich die Beieuchtungsanordnung voll funktionsfähig bleibt.

In Fig. 3 ist ein Leitungsschema einer derartigen Beleuchtungsanordnung mit sieben Adern LL1 bis LL7 im linken Verbindungskabel VL und RL1 Bis RL7 im rechten Verbindungskabel VR skizziert, welche den Funktionen
- LL1, RL1: Masse
- LL2, RL2: Spurleuchten, Markierungsleuchten, Rücklichter und Kennzeichenbeleuchtung
- LL3, RL3: Bremsleuchten
- LL4, RL4: Blinker links
- LL5, RL5: Blinker rechts
- LL6, RL6: Rückfahrscheinwerfer
- LL7, RL7: Nebelschlussleuchte

Zugeordnet sind und mit entsprechenden getrennten Zuleitungen SL über eine Steckverbindung ST zum Zugfahrzeug verbindbar sind. In der Steuereinrichtung SE sind entsprechende Leitungsverzweigungen zur gemeinsamen Beaufschlagung der Adern der beiden Verbindungskabel VL, VR vorhanden.

Die Steuereinrichtung kann ferner Sicherungen, Bedienelemente, Anzeigeelemente enthalten. Die Sicherungen können in kurzschlussfest zerstörungssicherer elektronischer Ausführung vorgesehen sein. Die Steuereinrichtung kann Signal-Einrichtungen FE zum drahtlosen Signalaustausch mit dem Zugfahrzeug aufweisen, so dass unter Beibehaltung der gebräuchlichen Steckerverbindungen zwischen Zugfahrzeug und Anhänger durch drahtlosen, vorzugsweise digitalen Signalaustausch die Funktionalität der elektrischen Anlage des Anhängers stark erweitert werden kann. In vorteilhafter Weiterbildung kann auf Seiten des Anhängers eine eigene elektrische Energiequelle, insbesondere in Form eines wiederholt aufladbaren Akkus BA vorgesehen sein, mittels dessen Teile der elektrischen Anlage auch bei abgestelltem und vom Zugfahrzeug gelöstem Anhänger betrieben werden können. Insbesondere können Teile der Beleuchtungsanlage, z. B. seitliche Markierungsleuchten und Heckleuchten, nachts aus dem Akku gespeist betrieben werden, um einen im öffentlichen Straßenraum abgestellten Anhänger von weitem erkennbar zu machen. Dabei können die beteiligten Beleuchtungseinrichtungen auch mit reduzierter Leistung betrieben werden. Eine Aufladung des Akkus kann z. B. bei Anschluss an ein Zugfahrzeug über die elektrische Steckerverbindung oder über anhängerseitige Quellen wie Dynamos oder photovoltaische Panels erfolgen.

Bei an der Heckleuchtenanordnung zu Leiterschleifen geschlossenen Adern der beiden Verbindungskabel kann vorteilhafterweise zusätzlich eine Prüfeinrichtung PE in der Steuereinrichtung vorgesehen sein, mittels welcher wenigstens eine, vorzugsweise alle der Leiterschleifen auf Durchgängigkeit geprüft werden können, indem ein Prüfsignal auf die Leiterschleife gegeben wird. Ein solches Prüfsignal kann ein Gleichstrom- oder ein Wechselstromsignal sein. Die Einkoppelung des Prüfsignals in eine Leiterschleife erfolgt z. B. über einen Prüfschalter PS, welcher zugleich die Verbindung einer Ader zu der Steckerverbindung für die Prüfdauer unterbricht. In Fig. 3 sind Prüfschalter PS für eine der Leiterschleifen umgeschaltet eingezeichnet. Die Prüfdauer kann so kurz gehalten werden, beispielsweise im Bereich von Millisekunden, dass auch bei aktiver Beleuchtung keine Unterbrechung wahrnehmbar ist. Die Prüfschalter sind vorzugsweise als elektronische Halbleiterschalter ausgeführt. Bei Einsatz eines Wechselstromsignals als Prüfsignal kann auch eine kapazitive und/oder induktive Einkopplung vorgesehen sein. Mehrere Leiterschleifen verschiedener Kabeladern können gleichzeitig oder zu getrennten Zeitpunkten geprüft werden. Wird bei einer Prüfung einer Leiterschleife ein Fehler detektiert, kann dieses an der Steuereinrichtung angezeigt und/oder an das Zugfahrzeug übertragen und dort dem Fahrer angezeigt werden. Eine derartige Fehleranzeige kann auch für sonstige festgestellte Fehlfunktionen der Beleuchtungsanordnung erfolgen, z. B. bei Ausfall einer einzelnen Beleuchtungseinrichtung.

Die mit gleichen Funktionen belegten Adern der beiden Verbindungskabel sind durch die Heckleuchtenanordnung hindurch elektrisch unter Bildung der geschlossenen Leiterschleifen verbunden. Solche elektrische Verbindungen können in einer ersten Ausführungsform durch eine im wesentlichen über die gesamte Länge der Heckleuchtenanordnung in y-Richtung durchgehende mehradrige Leiteranordnung, insbesondere ein Flachkabel, gebildet sein, wobei die einzelnen Beleuchtungsmodule der Beleuchtungsanordnung mit den jeweils zugeordneten Leitern der Leiteranordnung kontaktiert sind, vorzugsweise ohne Unterbrechung der Leiter, beispielsweise wiederum über Kontaktschneiden, die eine Isolierung der Leiteranordnung durchdringen. In anderer Ausführung kann die mehradrige Leiteranordnung als Schiene mit mehreren Leiterstrukturen in Längsrichtung ausgebildet sein, an welche die einzelnen Module, z. B. mittels mehrpoliger Steck-, Clip-, Klemm- oder Federkontaktvorrichtungen anschließbar sind.

In anderer Ausführung kann die Leiteranordnung durch mehrere in y-Richtung aneinandergereihte Module gebildet sein, welche jeweils an den einander zugewandten Kanten benachbarter Module korrespondierende Kontaktanordnungen zu den mehreren Adern der Leiteranordnung aufweisen und mehrere Leiterbahnen über den Verlauf der Module zwischen Kontaktanordnungen desselben Moduls an gegenüberliegenden Kanten durchführen. Die Module können vorteilhafterweise zumindest teilweise durch verschiedenen Beleuchtungsfunktionen dienende Module selbst und/oder, insbesondere in Lücken zwischen benachbarten Modulen durch Überbrückungsmodule ohne Beleuchtungsfunktion gebildet sein. ln wieder anderer Ausführung können die getrennten Module auf einem gemeinsamen Träger mechanisch verbunden und über mehradrige elektrische Verbindungen kontaktiert sein.

In Fig. 3 ist für die Leiteranordnung in der Heckleuchtenanordnung die Variante mit einem in Längsrichtung y der Heckleuchtenanordnung durchgehenden mehradrigen Kabel FKH skizziert, welches mit Abschnitten AK über die entgegen gesetzten Enden HER, HEL der langgestreckten Heckleuchtenanordnung HA hinaus verlängert und parallel zu den Längsseiten umgelenkt sein kann. Die Anschlussabschnitte können auch eigenständige Kabelabschnitte sein, welche elektrisch an das Kabel FKH angeschlossen sind. Die über die Enden HEL, HER hinausragenden Kabelabschnitte AK sind mit den Teil-Verbindungskabeln VL bzw. VR über Kupplungen KK elektrisch kontaktiert und vorzugsweise auch mechanisch verbunden. Innerhalb der Heckleuchtenanordnung HA sind die verschiedenen Beleuchtungsmodule mit den jeweils ihrer Funktion zugeordneten Adern des Kabels FKH kontaktiert. Das Kabel FKH kann zugleich teilweise als mechanische Verbindung der einzelnen Module dienen, beispielsweise in einem Modulverbund vor Befestigung auf einem Träger, z. B. einer Quertraverse am Fahrzeugheck oder einem mechanischen Zwischenträger. Die Anschlusskabel AK können vom gleichen Kabeltyp, insbesondere auch mit identischem Querschnitt wie die Verbindungskabel VL, VR oder von diesen verschieden sein. Zwischen beabstandeten Beleuchtungsmodulen können Distanzmodule DM ohne Beleuchtungsfunktion vorliegen.

Durch die individuelle Kontaktierung der einzelnen Module mit einer in y-Richtung durchgehenden gemeinsamen mehradrigen Leiteranordnung als Kabel, Schiene etc. ist auf einfacche Weise eine variable Positionierung der Module, insbesondere auch in unterschiedlicher Reiihenfolge und mit verschiedenen Modullängen in unterschiedlichen Leuchtenanordnungen möglich. Ferner kann dadurch ein defektes Modul leicht ausgewechselt werden.

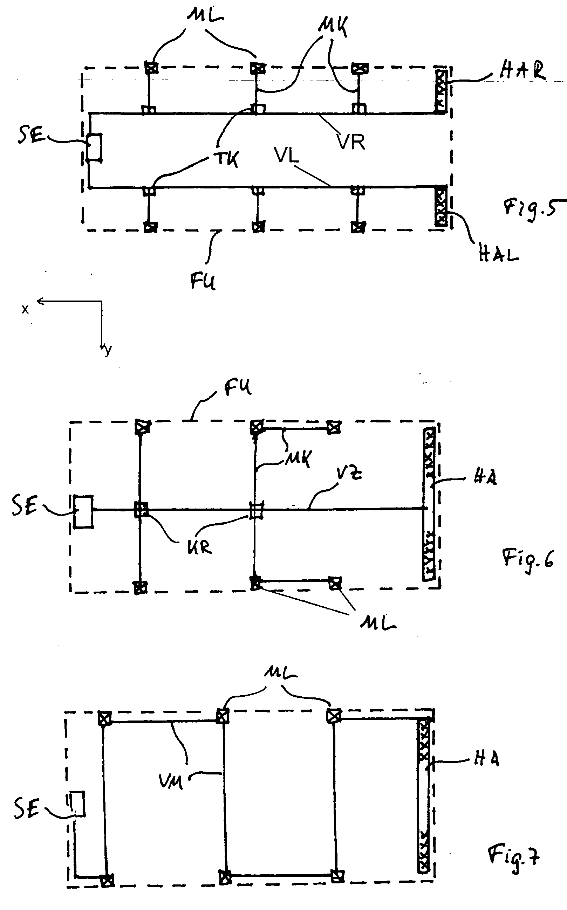

In Fig. 4 ist die Leitungsführung in der Heckleuchtenanordnung HA in der Variante skizziert, bei welcher keine oder nicht alle der Adern der Teil-Verbindungskabel VR, VL durch die Heckleuchtenanordnung hindurch verbunden sind. Für die Fortführung von elektrischen Verbindungen in y-Richtung in einer Leiteranordnung der Heckleuchtenanordnung ist die Variante dargestellt, bei welcher korrespondierende Kontaktanordnungen KAi, KBi an in Längsrichtung y der Heckleuchtenanordnung entgegen gesetzten Kanten der einzelnen Beleuchtungsmodule vorliegen. Jedes Modul, auch die zur Abstandsüberbrükkung eingesetzten Überbrückungsmodule UM, weist an in wenigstens einer, vorzugsweise beiden y-Richtung entgegen gesetzten Kanten eine erste Kontaktanordnung KAi bzw. eine zweite zu der ersten komplementäre Kontaktanordnung KBi auf, welche mit den Kontaktanordnungen benachbarter Module elektrische Verbindungen eingehen. Eine mechanische Verbindung benachbarter Module kann zusätzlich vorgesehen oder baulich mit den Kontaktanordnungen vereint sein. Randständige Verbindungsanordnungen HVL, HVR weisen entweder eine erste Kontaktanordnung KVL oder eine zweite Kontaktanordnung KVR sowie eine Einrichtung zur Kontaktierung je eines der Teil-Verbindungskabel VL, VR auf.

Ein der Verbindungsanordnung HVL bzw. deren Kontaktanordnung KVL unmittelbar benachbartes Beleuchtungsmodul FL weist eine der Verbindungsanordnung HVL zugewandte Kontaktanordnung KB1 auf, welche zu jedem Kontakt der Kontaktanordnung KVL einen Gegenkontakt besitzt, wenngleich für die diesem Beleuchtungsmodul zugewiesene Beleuchtungsfunktion nur zwei dieser Kontakte benötigt werden. Das Beleuchtungsmodul FL weist ferner an seiner der Verbindungsanordnung HVL abgewandten und dem in Längsrichtung y folgenden Beleuchtungsmodul HL zugewandten Kante eine Kontaktanordnung KA1 auf, welche mit der Kontaktanordnung KB2 des folgenden Beleuchtungsmoduls HL kontaktiert ist und über welche das folgende Beleuchtungsmodul und in Längsrichtung weiter von der Verbindungsanordnung entfernte Beleuchtungsmodule BL, RL, ZL der Heckleuchtenanordnung gespeist sind. Hierzu weist die Kontaktanordnung KA1 wenigstens für die Adern, welche zur elektrischen Ansteuerung bzw. Speisung der nachfolgenden Module dienen, je einen Kontakt und die Kontaktanordnung KB2 des folgenden Beleuchtungsmoduls die entsprechenden Gegenkontakte auf. Die Kontakte der Kontaktanordnung KA1 sind mit den entsprechenden Kontakten der Kontaktanordnung KB1 desselben Beleuchtungsmoduls auf diesem verbunden. Die Weiterführung der elektrischen Verbindungen zu nachfolgenden Beleuchtungsmodulen kann entsprechend gestaltet sein, wobei die Anzahl der Kontakte der Kontaktanordnungen sukzessive abnehmen und am letzten Beleuchtungsmodule einer Versorgungskette auch nur an einer Kante eine Kontaktanordnung aufweisen kann.

Vorteilhafterweise ist jedoch an einigen, vorzugsweise an allen Beleuchtungsmodulen die Anzahl der Kontakte an den in Längsrichtung entgegengesetzten Kanten angeordneten Kontaktanordnungen gleich groß. Vorzugsweise sind dabei jeweils die Kontakte der an entgegen gesetzten Kanten desselben Moduls vorgesehenen Kontaktanordnungen KAi, KBi paarweise elektrisch miteinander verbunden. Dadurch können z. B. die Module mit unterschiedlichen Beleuchtungsfunktionen in veränderbarer Reihenfolge gruppiert werden und/oder für gleiche Beleuchtungsfunktionen links und rechts identische Module verwendet werden. Die Anzahl der Adern kann bei nicht zu geschlossenen Leiterschleifen verbundenen Adern bei der Leiteranordnung und bei den Verbindungskabeln auf beispielsweise fünf Adern reduziert sein, wobei z. B. im linken Verbindungskabel VL neben der Masseader einzelne Adern für Blinker links, Bremsleuchte links, Rückfahrscheinwerfer und den gemeinsamen Betrieb von Heckleuchte links, Markierungsleuchten links und Kennzeichenleuchte links und im rechten Verbindungskabel neben der Masseader einzelne Adern für Blinker rechts, Bremsleuchte rechts, Nebelschlussleuchte und gemeinsamen Betrieb von Heckleuchte rechts, Markierungsleuchten rechts und Kennzeichenleuchte rechts vorgesehen sind. Zwischen den beiden Kennzeichenleuchten kann ein Abstandsmodul AM vorgesehen sein, welches keine elektrische Funktion hat und keine Weiterführung von Leiterbahnen bewirkt. Es können aber auch die links und rechts mit identischen Funktionen belegten Adern bzw. Leiterbahnen auch durch das Abstandsmodul AM hindurch geschlossen sein. Es kann auch nur eine einzige von einer Seite gespeiste Kennzeichenleuchte vorgesehen sein. Als Beleuchtungsmodule der Heckanordnung sind in Fig. 3 und Fig. 4 jeweils Heckleuchten HL links und rechts, Bremsleuchten BL links und rechts, Blinker links FL und Blinker rechts FR, Nebelschlussleuchte NL rechts, Rückfahrscheinwerfer RL links sowie in Fig. 3 ein mittiges, in Fig. 4 zwei Kennzeichenbeleuchtungsmodule ZL vorgesehen. Es können auch mehrere Beleuchtungsfunktionen auf einem Modul zusammengefasst, dabei aber über die einzelnen Adern oder Leiterbahnen unabhängig voneinander angesteuert sein.

Vorteilhafterweise können aber auch bei der Variante mit nicht in der Heckleuchtenanordnung zu geschlossenen Leiterschleifen der Teil-Verbindungskabel VL, VR diese Verbindungskabel eine Anzahl von Adern aufweisen, welche der Variante mit geschlossenen Leiterschleifen, z. B. sieben Adern, wie im Beispiel nach Fig. 3, entspricht, wobei dann einzelne Adern in den Teil-Verbindungskabeln keine Funktion ausüben, z. B. eine Ader für Blinker rechts im linken Verbindungskabel.

Die einzelnen Merkmale der Leitungsführungen nach Fig. 3 und Fig. 4 können auch in anderen Kombinationen vorteilhaft realisiert sein. Beispielsweise können auch bei den Verbindungsanordnungen HVL, HVR Kabelabschnitte entlang der Längsseiten vorgesehen sein, welche in Fahrtrichtung x von der Heckleuchtenanordnung beabstandet mit den Verbindungskabeln VL bzw. VR kontaktiert sind. Das Kabel FKH der Heckleuchtenanordnung kann auch nur bis zu randständigen Verbindungsanordnungen reichen. Eine durch die Heckleuchtenanordnung durchgehende Verbindung mehrerer oder aller Adern der Verbindungskabel VR, VL kann auch allein über Kontaktanordnungen benachbarter Module erfolgen. Die interne Leitungsanordnung der Heckbeleuchtungsanordnung kann auch bei nicht durchgehenden elektrischen Verbindungen wie in Fig. 4 mehradrige Kabel nach Art der Fig. 3 von beiden Seiten her aufweisen. Auch bei nicht in der Heckleuchtenanordnung zu Ringleitungen durch verbundenen Adern der Verbindungskabel können die Verbindungskabel mehr als die benötigten fünf Adern, insbesondere beispielsweise sieben Adern aufweisen, wodurch für verschiedene Anordnungen gleiche Kabel, gleiche Verbindungsanordnungen, gleiche Beleuchtungsmodule verwandt werden können, was die Lagerhaltung vereinfacht und trotz dann nicht benutzter Kabeladern, Kontakte etc. zu Kosteneinsparungen führen kann. Mehrere Beleuchtungsfunktionen können abweichend von den schematischen Skizzen nach Fig. 3 und Fig. 4 auf einem gemeinsamen Trägermodul realisiert sein, wodurch die Anzahl der Kontaktanordnungen reduziert werden kann. Die jeweiligen Trägermodule sind dann mti mehr als zwei Adern der elektrischen Leiteranordnung verbunden.

In Fig.5 ist ein Leitungsverlauf skizziert, bei welchem eine Heckleuchtenanordnung zweigeteilt ist in zwei Teilanordnungen HAL, HAR welche z. B. über Radabdeckungen der hinteren Radachse eines Anhängers angeordnet sind. Die Verbindungsleitungen VL, VR sind in diesem Beispiel gegenüber dem linken und dem rechten Fahrzeugrand beabstandet nach innen zur Fahrzeugmitte hin versetzt und beispielsweise entlang von Längsträgern eines Anhängerchassis geführt. In Längsrichtung x zwischen der Steuereinrichtung SE und der Heckleuchtenanordnung HAL, HAR liegende seitliche Markierungsleuchten ML sind über T-Abzweigungen TK und einzelne Kabelabschnitte MK, welche weniger Adern als die Verbindungsleitungen aufweisen können, mit diesen kontaktiert, wobei die Verbindungskabel an den T-Abzweigungen nicht unterbrochen sind. Die Verbindungsleitungen VL, VR können auf je fünf Adern wie in Fig. 5 beschränkt sein, weisen aber vorzugsweise mit wenigstens je sieben Adern einen vollen Adernsatz für alle unabhängigen Beleuchtungsfunktionen auf.

Bei der in Fig. 6 skizzierten Leitungsführung ist ein einziges zentrales Verbindungskabel VZ bei der Fahrzeugmitte vorgesehen, an welches seitliche Markierungsleuchten über eigene Kabelabschnitte MK und T-Abzweigungen oder wie skizziert Kabelkreuzungskupplungen KR angeschlossen sind, wobei wieder das Verbindungskabel an solchen Anschlussstellen ununterbrochen ist. Mehrere seitliche Markierungsleuchten ML können über einen einzigen Kabelabschnitt MK gespeist sein. Das zentrale Verbindungskabel VZ kann auch von der Fahrzeugmitte seitlich versetzt geführt sein, insbesondere auch entlang eines Längsträgers oder entlang einer Außenseite des Fahrzeugs. Das Verbindungskabel kann mit einer zusammenhängenden Heckleuchtenanordnung mittig oder an einer Außenseite verbunden sein.

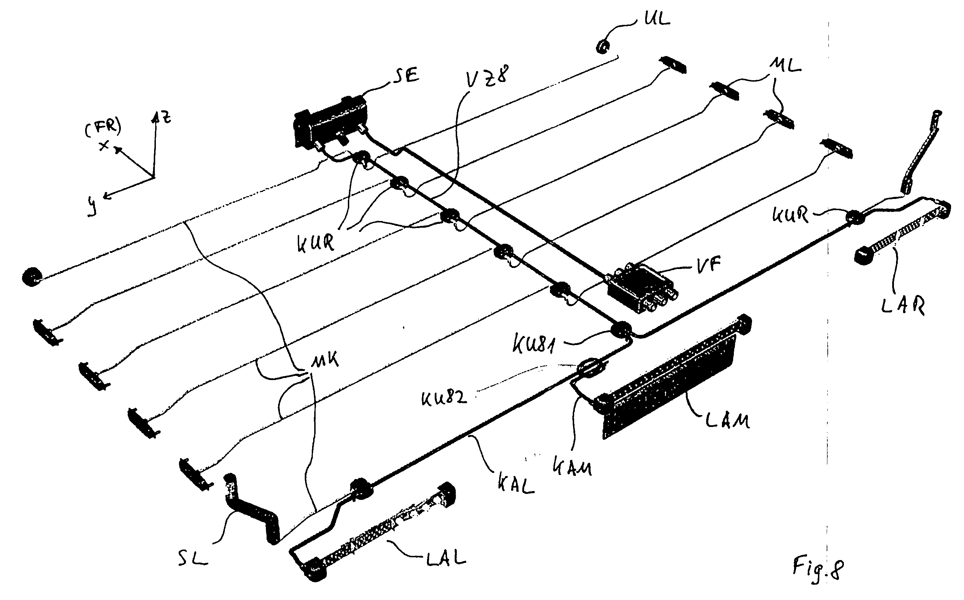

In Fig. 7 ist eine Führung eines einzigen Verbindungskabels VM mäanderförmig zwischen gegenüber liegenden Fahrzeuglängsseiten skizziert, bei welcher die Markierungsleuchten beider Längsseiten direkt an das einzige Verbindungskabel anschließbar sind.

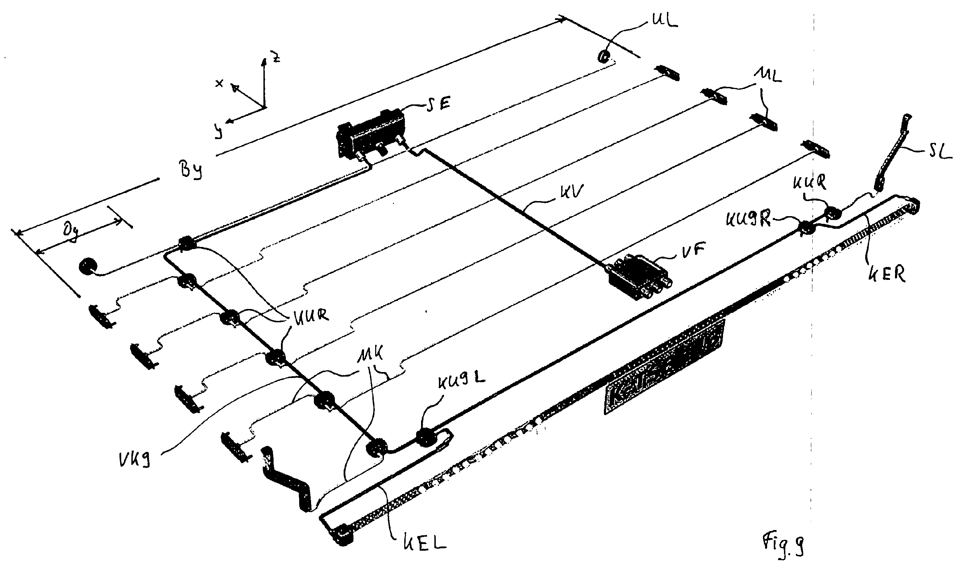

Fig. 8 zeigt eine bevorzugte Ausführung einer Kabelführung mit einem nahe bei der Fahrzeugmitte geführten Verbindungskabel VZ8 zwischen einer frontseitigen Steuereinrichtung SE und einer dreiteiligen Heckleuchtenanordnung. Die Heckleuchtenanordnung weist in drei getrennten Gehäusen separate Leuchtenanordnungen LAL, LAM und LAR auf, wobei z. B. in der linken Leuchtenanordnung LAL die Beleuchtungsfunktionen linkes Rücklicht, linkes Bremslicht, linker Blinker und Rückfahrscheinwerfer, in der rechten Leuchtenanordnung LAR die Beleuchtungsfunktionen rechtes Rücklicht, rechtes Bremslicht, rechter Blinker und Nebelschlussleuchte und in der mittleren Leuchtenanordnung LAM eine Kennzeichenbeleuchtung, ein mittleres Bremslicht und ein zusätzliches Warnblinklicht vorgesehen sein können.

Die Beleuchtungsanordnung enthält außer der Heckleuchtenanordnung wiederum an der Frontseite des Anhängers Umrissleuchten UL, entlang beider Längsseiten seitliche Markierungsleuchten ML und im Heckbereich beidseitig Spurhalteleuchten SL. Die Umrissleuchten UL und die seitlichen Markierungsleuchten ML sind über Kabelabschnitte MK mit gegenüber dem zentralen Verbindungskabel VZ8 reduzierter Adernzahl, vorzugsweise in zweiadriger Ausführung, und Kupplungen KUR an das zentrale Verbindungskabel angeschlossen. Die Kupplungen KUR kontaktieren in dem zentralen Verbindungskabel VZ8 vorzugsweise nur die für die Versorgung der Umrissleuchten bzw. Markierungsleuchten erforderlichen Adern. Die Kupplungen KUR bilden Kreuzungskupplungen in dem Sinne, dass die Kupplungen auf ein durchgehendes Verbindungskabel aufgesetzt sind und die angeschlossenen Kabelabschnitte MK gleichfalls durchgehend sind und in zwei Richtungen wegführen. Die Kabelführung in den Kupplungen selbst kann dabei, wie in Fig. 8 angedeutet, vorteilhafterweise einen parallelen Verlauf des Verbindungskabels und der durchgehenden Kabelabschnitte MK zeigen. Die Umrissleuchten UL und die seitlichen Markierungsleuchten ML sind jeweils paarweise an einen Kabelabschnitt MK angeschlossen und im wesentlichen symmetrisch bezüglich der Fahrzeugmittenlängsebene angeordnet. Die Umrissleuchten UL und die Markierungsleuchten ML sind an die Kabelenden der Kabelabschnitte MK angeschlossen.

Das zentrale Verbindungskabel VZ8 enthält alle für die Ansteuerung, insbesondere analoge Ansteuerung und Versorgung der gesamten Beleuchtungsanordnung aus Heckleuchtenanordnung LAL, LAM, LAR, Umrissleuchten UL, Markierungsleuchten ML und Spurhalteleuchten SL erforderlichen Adern. Das zentrale Verbindungskabel VZ8 ist im Heckbereich seitlich umgelenkt und ununterbrochen zum Anschluss an die rechte Leuchtenanordnung LAR fortgeführt. Über eine Kabelkupplung KU81 ist ein Kabel KAL, welches vorzugsweise identisch zu dem Verbindungskabel VZ8 aufgebaut ist, an das Verbindungskabel VZ8 mit eindeutiger Adernzuordnung angeschlossen. Das Kabel KAL führt zu der linken Leuchtenanordnung LAL. Im Verlauf des Kabels KAL ist über eine weitere Kabelkupplung KU82 und ein Kabel KAM die mittlere Leuchtenanordnung LAM angeschlossen, wobei bei der genannten Mehrfach-Beleuchtungsfunktion in der mittleren Leuchtenanordnung LAM das Kabel KAM vorteilhafterweise wiederum identisch zu dem zentralen Verbindungskabel VZ8 und dem Kabel KAL aufgebaut ist und die Kupplung KK82 eine eindeutige Adernzuordnung der darin miteinander verbundenen Kabel bewirkt. Spurhalteleuchten SL sind über weitere Kupplungen und Kabelabschnitte MK an die zu den linken und rechten Leuchtenanordnungen LAL, LAR führenden Kabel angeschlossen, wobei diese weiteren Kupplungen vorteilhafterweise vom gleichen Typ KUR sind wie die Kreuzungskupplungen zum paarweisen Anschluss der seitlichen Markierungsleuchten und der Umrissleuchten, hier aber als Abzweig-Kupplungen mit nur einem wegführenden Kabelabschnitt MK ausgeführt sind. Anstelle des bis zur Leuchtenanordnung LAR durchgehenden Verbindungskabels VZ8 kann vorteilhafterweise auch an der Leuchtenanordnung LAR ein Anschlusskabelabschnitt vorgesehen sein, welcher mit einer Kabelkupplung an das Verbindungskabel angeschlossen wird.

Wenngleich für die Ansteuerung und Versorgung der einzelnen Leuchtenanordnungen LAL, LAM, LAR der Heckleuchtenanordnung mit deren jeweils gegenüber der gesamten Heckleuchtenanordnung eingeschränktem Funktionsumfang nur ein Teil der Adern des zentralen Verbindungskabels VZ8 benötigt werden, weisen die Kabel KAL und KAM vorteilhafterweise jeweils den vollständigen Adersatz des zentralen Verbindungskabels auf und sind vorzugsweise vom identischen Kabeltyp wie das zentrale Verbindungskabel VZ8. Dies ermöglicht den Einsatz von immer gleichen Kabeln und Kupplungen. Auch die Kabelanschlüsse der einzelnen Leuchtenanordnungen können vorteilhafteniveise unabhängig von in den Leuchtenanordnungen enthaltenen Beleuchtungsfunktionen jeweils gleich ausgeführt werden. Im gesamten Verkabelungssystem für die Beleuchtungsanordnung treten damit nur zwei verschiedene Kabeltypen und zwei verschiedene Kupplungstypen auf.

In Fig. 8 ist als weiterer Bestandteil der elektrischen Ausrüstung eines Anhängers noch ein über ein separates Verbindungskabel KV mit der Steuereinrichtung SE verbundener Verteiler VF eingezeichnet, über welchen beispielsweise elektrische Aktoren und Sensoren für den Fahrbetrieb, wie z. B. pneumatische Ventile, Positionssensoren beweglicher Teile etc. angesteuert werden können.

In Fig. 9 ist ein Kabelsystem skizziert, bei welchem die elektrische Verbindung zwischen der frontseitigen Steuereinrichtung SE und der heckseitigen Heckleuchtenanordnung eines Anhängers in Fahrtrichtung x durch ein einziges Verbindungskabel VK9 gegeben ist, welches wie das zentrale Verbindungskabel VZ8 nach Fig. 8 Adern zur selektiven Ansteuerung und Versorgung aller verschiedener Beleuchtungsfunktionen enthält. Das Verbindungskabel VK9 ist gegen die Mittellängsebene des Anhängers in y-Richtung versetzt, zugleich aber auch von der linken Längsseite beabstandet, so dass auch die Umrissleuchte und die seitlichen Markierungsleuchten entlang der linken Längsseite über Kabelabschnitte MK und Kupplungen KUR wie in Fig. 8 an das Verbindungskabel angeschlossen sind. Das kabel VK9 kann beispielsweise vorteilhaft entlang eines Längsträgers eines Fahrzeugchassis verlegt sein. Der seitliche Abstand DY gegen die linke Fahrzeuglängsseite beträgt vorteilhafterweise wenigstens 10 % der gesamten Fahrzeugbreite, z. B. als Abstand BY der seitlichen Markierungsleuchten. Umrissleuchten und seitliche Markierungsleuchten sind wie in Fig. 8 über als Kreuzkupplungen wirkende Kupplungen KUR paarweise mit dem in Längsrichtung x verlaufenden Abschnitt des Verbindungskabels VK9 verbunden.

Das Verbindungskabel VK9 ist im Heckbereich quer zur Fahrtrichtung FR zur rechten Fahrzeugseite hin umgelenkt und die Heckleuchtenanordnung, welche im skizzierten Beispiel mit quer zur Fahrtrichtung einstückig durchgehenden Gehäuse dargestellt ist, ist mit Anschlusskabeln KEL, KER an beiden seitlichen Gehäuseenden angeschlossen, wobei die Anschlusskabel KEL, KER ihrerseits wieder mit Kupplungen KU9L, KU9R mit den Verbindungskabel VK9 elektrisch verbunden sind und vorzugsweise, wie die Kupplungen KU81 und KU82 nach Fig. 8, einen vollständigen Satz von Adern aufweisen und insbesondere vom Kabeltyp identisch mit den Verbindungskabel VK9 sein können. Die mehreren Adern der beiden Anschlusskabel KEL, KER können wieder innerhalb der Heckleuchtenanordnung durch eine mehradrige Leiteranordnung zu Leiterschleifen geschlossen sein.

Die Spurhalteleuchten SL sind in Fig. 9 in zu Fig. 8 analoger Weise angeschlossen. Auch in Fig. 9 ist ein separat mit der Steuereinrichtung verbundener Verteiler VF eingezeichnet.

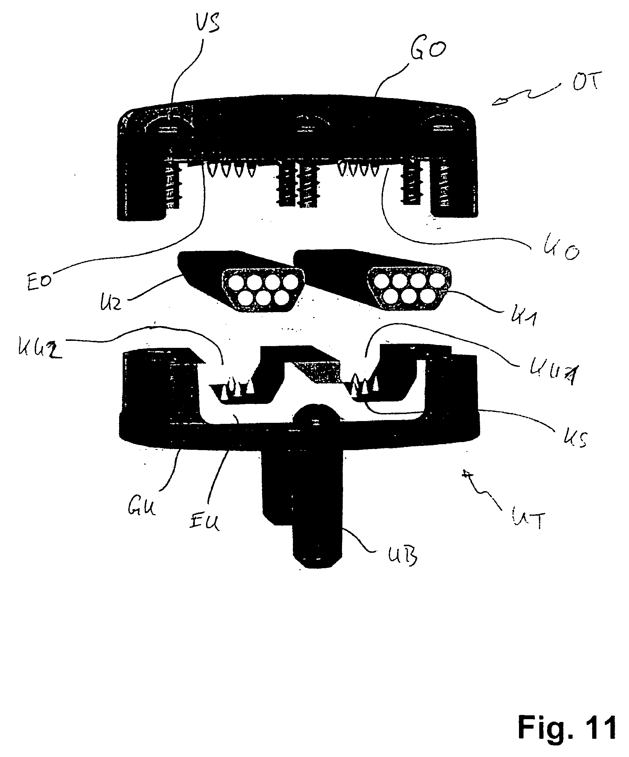

Als Verbindungskabel kommen vorteilhafterweise Flachkabel mit einer oder zwei Leiterebenen zum Einsatz. Besonders vorteilhaft ist ein Kabelquerschnitt mit nicht drehsymmetrischer Außenkontur, wodurch auf einfache Weise eine eindeutige Lage in Verbindungsanordnungen, Abzweigungen etc. mit definierter Position der einzelnen Adern zu Kontaktschneiden gewährleistet ist. Bei Flachkabeln mit nur einer Leiterebene kann dies z. B. durch eine außermittige Verdickung, z. B. in Verbindung mit einer dort geführten Masseader mit größerem Aderquerschnitt, erfolgen. Ein besonders vorteilhafter Kabelquerschnitt KT mit zwei Leiterebenen und trapezförmiger Außenkontur ist in Fig. 10 skizziert. In einer ersten Leiterebene sind vier, in einer zweiten Leiterebene drei Adern in das Isoliermaterial IM in definierter Position eingebettet und vorteilhafterweise sind die Adern der beiden Ebenen quer zu ihrer Längsrichtung auf Lücke gegeneinander versetzt angeordnet. Kontaktschneiden KS sind in Verbindungsanordnungen, Abzweigungen, Kupplungen etc. zu beiden Seiten des Kabels angeordnet, wie in Fig. 10 angedeutet.

In der in Fig. 11 skizzierten Ausführung weist ein Unterteil UT Befestigungsstrukturen UB, beispielsweise nach Art eines geschlitzten Dübels, als Bestandteile eines Grundkörpers GU aus formstabilem erstem Material auf. Das Unterteil UT enthält ferner in den Grundkörper GU eingebettet einen Einsatzkörper EU, welcher Kabelaufnahmen KU1 und KU2 für zwei Kabel K1 bzw. K2 bildet. Der Einsatzkörper kann auch zweiteilig mit je einem Teilkörper für jede der beiden Kabelaufnahmen ausgeführt sein. In die Kabelaufnahmen KU1 bzw. KU2 ragen Kontaktspitzen KS aus leitendem Material, vorzugsweise aus Metall. Die Kabelaufnahmen sind der Umrißform der Kabel K1, K2 angepaßt, so dass die Kabel in definierter Position in den Kabelaufnahmen einliegen. Die Position der Kontaktspitzen KS ist auf diese definierte Einlageposition und die vorgegebene Lage der einzelnen Adern in den Kabeln K1, K2 abgestimmt. Die beiden Kabel zeigen Adern in zwei voneinander beabstandeten Ebenen entsprechend dem in Fig. 10 skizzierten Kabelquerschnitt. Durch die Kontaktspitzen KS in den Kabelaufnahmen des Unterteils werden einige, im skizzierten Beispiel die drei Adern der unteren Aderebene kontaktiert.

Der Kabelverbinder enthält ferner ein Oberteil OT, welches gleichfalls einen Grundkörper GO und einen in Fig. 11 nur andeutungsweise sichtbaren Einsatzkörper EO enthält. Der Einsatzkörper EO bildet vorzugsweise den Kabeln zuweisend eine obere Begrenzung der Kabelaufnahmen. Vom Oberteil her ragen zur Kontaktierung der jeweils vier Adern der oberen Aderebene der beiden Kabel K1, K2 vier Kontaktspitzen in die durch unteren Einsatzkörper EU und oberen Einsatzkörper EO im zusammengebauten Zustand begrenzten Kabelaufnahmen. Verbindungsschrauben VS gewährleisten eine sichere Verbindung von Oberteil OT und Unterteil UT unter klemmendem Einschluss der beiden Kabel K1, K2 in den Kabelaufnahmen. Im Unterteil UT sind im skizzierten Beispiel zur Kontaktierung der mittleren der drei Adern der unteren Aderebene zwei in Längsrichtung der Kabel beabstandete Kontaktspitzen vorgesehen. Eine solche Doppelkontaktierung ist insbesondere vorteilhaft für eine mehreren Einzelstromkreisen gemeinsame Masseader in den beiden Kabeln K1, K2.

Oberteil und Unterteil sind vorteilhafterweise als Kunststoff-Spritzgußkörper mit eingebetteten Brückenkontakten, welche paarweise über Leiterbrücken verbundene Kontaktspitzen aufweisen, gebildet. Vorzugsweise bestehen Grundkörper GU bzw. GO und Einsatzkörper EU bzw. EO aus verschiedenen Materialien, wobei die Grundkörper im wesentlichen formstabil aus einem ersten, härteren Material und die Einsatzkörper EU bzw. EO aus einem zweiten Material mit gegenüber dem ersten Material geringerer Härte bestehen. Die Einsatzkörper können insbesondere aus einem thermoplastischen Elastomer bestehen, welches vorzugsweise eine Shore-Härte zwischen 70 und 85 besitzt. In besonders vorteilhafter Ausführungsform enthält das zweite Material der Einsatzkörper EU bzw. EO noch Komponenten mit haftvermittelnder oder klebender Wirkung zwischen dem ersten und dem zweiten Material und dem zweiten Material und dem Isoliermaterial der Kabel. Hierdurch kann eine weitere Verbesserung der dauerhaften Wasserdichtigkeit der Grenzflächen zwischen den beiden Materialien bzw. den Einsatzkörper und den Kabeln erreicht werden.

Vorteilhafterweise werden zuerst die Grundkörper GU als Spritzgußteile hergestellt, wobei an deren den Einsatzkörper zuweisenden Flächen vorteilhafterweise die aus Fig. 11 ersichtlichen Positionierstrukturen PS erzeugt werden, welche zur lagerichtigen Ausrichtung der Leiterbrücken LB der Brückenkontakte dienen und mit Gegenstrukturen der Leiterbrücken korrespondieren. Die Brükkenkontakte sind vorteilhafterweise für alle verbundenen Kabelpaare gleich und sind je nach zu kontaktierendem Aderpaar in Richtung quer zur Kabellängsrichtung unterschiedlich positioniert. Gemäß einer bevorzugten Vorgehensweise werden die Grundkörper GU bzw. GO nach Einsetzen der Kontaktbrücken erneut in ein Spritzgußwerkzeug eingelegt, in welchem dann die Einsatzkörper EU bzw. EO angespritzt werden. Durch passende Materialwahl für Grundkörper und Einsatzkörper, insbesondere unter Zufügung der genannten haftvermittelnden bzw. klebenden Komponente kann ein enger Materialkontakt an den Grenzflächen zwischen Grundkörpern und Einsatzkörpern erreicht werden.

An dem Grundkörper können vorteilhafterweise noch in den Skizzen nicht enthaltene Haltestrukturen für die Kabel vorgesehen sein, so dass diese während der Montage bis zur Befestigung der Oberteile auf den Grundkörpern sicher in den Kabelaufnahmen gehalten sind. Solche Haltestrukturen können z. B. elastisch nachgebende, die Kabel an deren Kanten hintergreifende Schnapphaken oder dergleichen sein. Solche Haltestrukturen können vorteilhaft in Längsrichtung an die Kabelaufnahmen in den Einsatzkörpern als Bestandteile der Grundkörper ausgebildet sein.

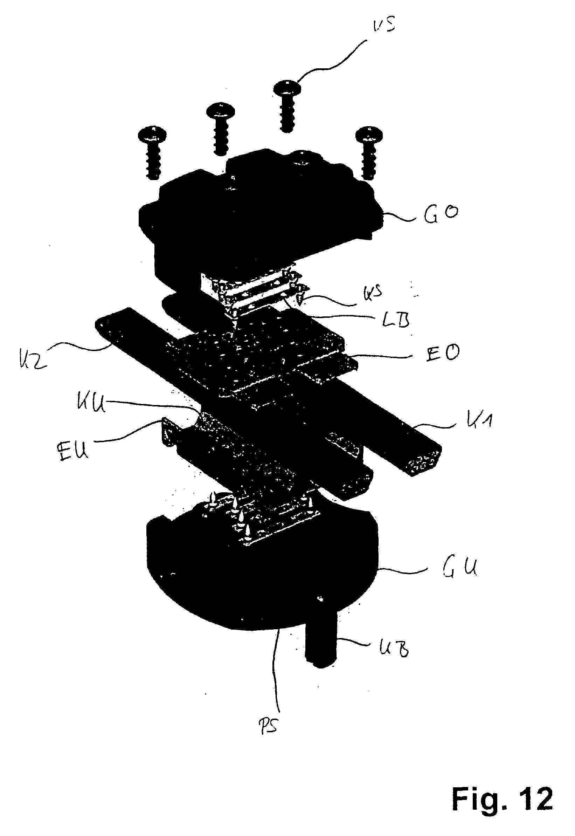

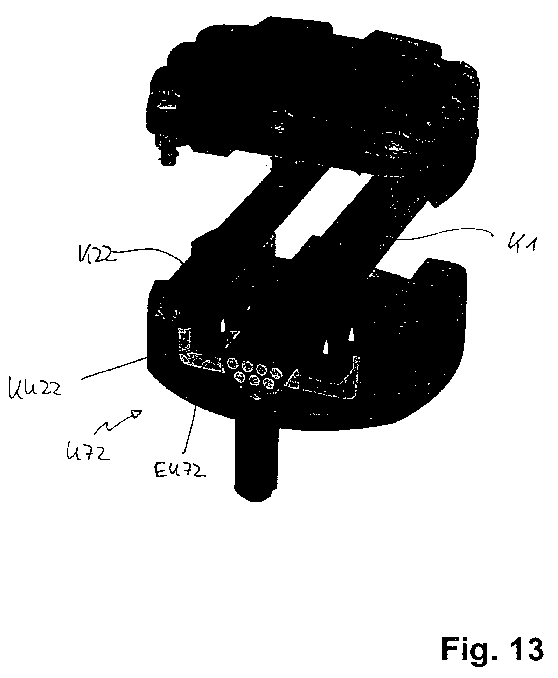

In Fig. 13 ist eine Variante eines Kabelverbinders skizziert, bei welchem ein siebenadriges Kabel K1 der in Fig. 10 skizzierten Art und ein zweiadriges Kabel K22 verbunden und elektrisch kontaktiert sind. In diesem Fall sind lediglich zwei Kontaktbrücken im Unterteil U72 vorgesehen und nur je zwei Adern der beiden Kabel paarweise kontaktiert. Vorteilhafterweise können die Grundkörper von Oberteil und Unterteil in dem Ausführungsbeispiel nach Fig. 13 identisch sein mit den Grundkörpern bei der Verbindung zweier siebenadriger Kabel nach Fig. 11 und Fig. 12 und eine Anpassung an den anderen Kabelquerschnitt des nur zweiadrigen Kabels K22 kann allein durch eine andere Ausbildung der Kabelaufnahme KU22 in den Einsatzkörpern, eventuell auch allein in dem Einsatzkörper EU72 des Unterteils U72 berücksichtigt sein. Im skizzierten Beispiel weist das zweiadrige Kabel K22 eine um 180° drehsymmetrische Außenkontur auf, so dass an sich eine Adervertauschung beim Anschluss möglich wäre. Zur Vermeidung von Fehlanschlüssen bei Gleichstromkomponenten der zu übergebenden Signale können in an das zweiadrige Kabel angeschlossenen Verbrauchern Gleichrichterbrücken oder ähnliche, Fehlpolungen ausschließende bzw. tolerierende elektronische Bauteile vorgesehen sein.

In nicht skizzierter Ausführung können die Kontaktspitzen auch aus formstabilem Kunststoff bestehen und mit einer elektrisch leitenden Schicht beschichtet sein. Die elektrisch leitende Schicht ist in vorteilhafter Ausführung eine in einem Sinterprozess haftfest mit dem Kunststoff der Kontaktspitzen verbundene Sinterschicht. Die Verbindung zwischen zwei Kontaktspitzen eines Brückenkontakts kann durch einen eingesetzten Leiterstreifen gebildet sein, ist aber vorzugsweise gleichfalls als eine mit der Schicht auf den Kontaktspitzen einheitliche Sinterschicht ausgeführt. Vorzugsweise wird das Leitermaterial vor dem Sinterprozess als durchgehende Fläche in und zwischen den beiden Kabelaufnahmen aufgebracht und vor oder nach dem Sinterprozess durch selektiven Abtrag, z. B. mittels eines Lasers, zur Bildung elektrisch getrennter Brückenkontakte strukturiert. Das Sintermaterial kann auch, z. B. über eine Siebdruckmaske, in strukturierter Flächenaufteilung selektiv aufgebracht werden. Das Kunststoffmaterial der Kontaktspitzen ist in diesem Fall vorteilhaft formstabil und hart. Insbesondere können Oberteil und Unterteil jeweils einstückig und materialhomogen als Spritzgußteil ausgeführt sein.

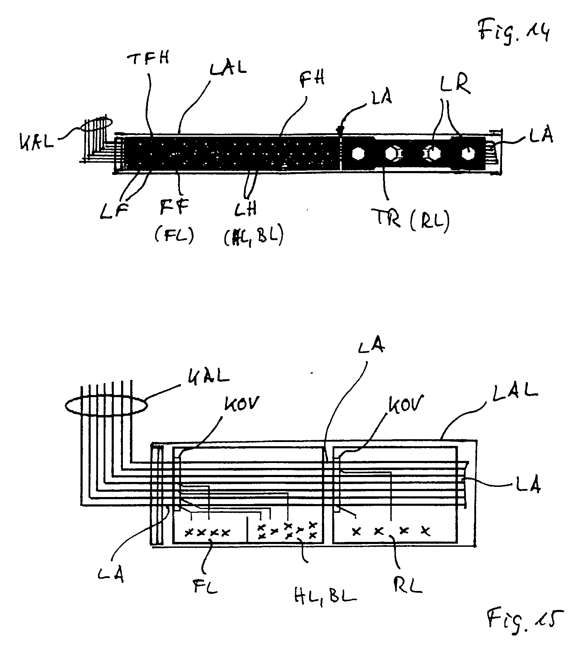

Die in Fig. 8 vorgesehenen, einzelnen Leuchtengehäuse enthalten jeweils eine gegenüber dem Gesamtfunktionsumfang der Heckleuchtenanordnung reduzierte Anzahl von unabhängigen Beleuchtungsfunktionen und sind jeweils nur über ein Anschlusskabel versorgt, welches an einem Ende des langgestreckten Leuchtengehäuses angeschlossen ist. Fig. 14 zeigt beispielhaft einen vorteilhaften internen Aufbau der Leuchtenanordnung LAL aus zwei Trägerplatinen, welche in Längsrichtung y des langgestreckten Leuchtengehäuses aufeinanderfolgen. Eine erste Trägerplatte TFH enthält in einem linken Feld FF eine Mehrzahl von Leuchtendioden LF für die Funktion FL, Blinker links und in einem rechten Feld FH, gemeinsam mit unterschiedlicher Strombeaufschlagung genutzter oder getrennt angesteuert ineinander gruppiert angeordneter Leuchtdioden LH für die Funktionen HL, Rücklicht und BL, Bremslicht. Auf einer zweiten Trägerplatine TR sind Leuchtdiodenanordnungen LR für die Funktion Rückfahrscheinwerfer angeordnet, welche zur optimalen Ausleuchtung des Bereichs hinter dem Fahrzeug mit strahlformenden Reflektorgehäusen, Linsen etc. versehen sein können.

Hinter den beiden Trägerplatinen ist eine mehradrige Leiteranordnung LA angedeutet, über welche beide Module angesteuert und versorgt sind. Die Leiteranordnung kann z. B. ein Flachkabel enthalten, an welches die beiden Trägerplatinen über Kontaktvorrichtungen mit Schneidklemmkontakte, Spitzenkontakte etc. unter Durchdringung der Kabelisolierung elektrisch angeschlossen sind. In anderer Ausführung kann die mehradrige Leiteranordnung eine Kontaktschiene mit mehreren elektrisch getrennten Leiterstrukturen in y-Richtung sein, an deren Leiterstrukturen die Trägerplatinen durch Steck-, Clip-, Klemm- oder Federkontakte etc. angeschlossen sein können. Der Anschluss der Trägerplatine über mit diesen verbundene mehrpolige Kontaktanordnungen an die mehradrige Leiteranordnung kann vorteilhafterweise in y-Richtung an beliebiger Stelle erfolgen, so dass eine solche Anschlussart besonders flexibel hinsichtlich der Zusammenstellung einer Leuchtenanordnung aus unterschiedlichen Trägerplatinen ist. Ferner kann auf einfache Weise eine beliebige Trägerplatine im Schadensfall ausgetauscht werden.

Für die Versorgung und Ansteuerung der beiden Trägerplatinen mit den Beleuchtungsfunktionen Blinker links, Rücklicht, Bremslicht und Rückfahrscheinwerfer genügen prinzipiell unter Einschluss einer gemeinsamen Masseader fünf Adern in dem Anschlusskabel KAL und der internen Leiteranordnung LA entsprechend der Versorgung und Ansteuerung eines Teils der Heckleuchtenanordnung nach Fig. 4. In dem in Fig. 15 skizzierten Leitungsschema ist eine bevorzugte Ausführung skizziert, bei welcher Anschlusskabel KAL und interne Leiteranordnung LA jeweils mit dem vollen Adernsatz von sieben Adern für alle unabhängigen Beleuchtungsfunktionen der gesamten Heckleuchtenanordnung aufweisen. Über die Kabelkupplung KU81 nach Fig. 8 sind auch alle Adern des Anschlusskabels und der Leiteranordnung mit den jeweiligen Funktionssignal beaufschlagt, wovon aber auf den Trägerplatinen nur die Signale auf den den Platinenfunktionen zugeordneten Adern abgegriffen und genutzt werden. Die Kontaktvorrichtungen an den Trägerplatinen können dabei alle Adern der Leiteranordnung LA kontaktieren, aber nur die benötigten Adern auf der Platine elektrisch weiterverbinden. Die Verwendung des vollen Adernsatzes auch in Leuchtenanordnungen mit reduziertem Funktionsumfang hat den Vorteil, dass gleiche Kabel, Leiteranordnungen und Kontaktvorrichtungen für funktionsreduzierte Leuchtenanordnungen und für Leuchtenanordnungen mit vollem Funktionsumfang eingesetzt werden können und dadurch die Zahl unterschiedlicher Komponenten gering gehalten werden kann.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar. Insbesondere können die Verbindungskabel mehr als die für die Beleuchtungsanordnung erforderlichen Adern aufweisen und zum Anschluß weiterer elektrischer Elemente, insbesondere Aktoren und Sensoren dienen.

## Patentansprüche

1. Beleuchtungsanordnung eines Lastfahrzeugs, insbesondere eines Anhängers mit einer in Fahrtrichtung vorne liegenden elektrischen Leistungsquelle, einer in Fahrtrichtung hinten liegenden Heckleuchtenanordnung als Leistungsverbraucher und wenigstens einem zwischen diesen verlaufenden mehradrigen Verbindungskabel, **dadurch gekennzeichnet, dass** das Kabel mehrere getrennte Adern für wenigstens zwei funktionell verschiedene Beleuchtungseinrichtungen der Heckleuchtenanordnung enthält und im Verlauf des Verbindungskabels weitere Verbraucher ohne Unterbrechung des Verbindungskabels an dieses direkt oder über weitere Kabel angeschlossen sind.

2. Anordnung nach Anspruch 1, **dadurch gekennzeichnet, dass** der Anschluss weiterer Verbraucher mittels die Isolierung des Verbindungskabels durchdringender und je eine Ader kontaktierender Spitzen oder Schneiden gegeben ist.

3. Anordnung nach Anspruch 1 oder 2, **dadurch gekennzeichnet, dass** als weitere Verbraucher Markierungsleuchten entlang Längsseiten des Fahrzeugs angeschlossen sind.

4. Anordnung nach einem der Ansprüche 1 bis 3, **dadurch gekennzeichnet, dass** das Verbindungskabel von beiden Längsseiten beabstandet geführt ist.

5. Anordnung nach Anspruch 4, **dadurch gekennzeichnet, dass** weitere Verbraucher an den Längsseiten über weitere, zumindest überwiegend quer zur Fahrtrichtung verlaufende Kabel an das Verbindungskabel angeschlossen sind.

6. Anordnung nach einem der Ansprüche 1 bis 3, **dadurch gekennzeichnet, dass** das Verbindungskabel entlang einer Längsseite geführt ist.

7. Anordnung nach Anspruch 6, **dadurch gekennzeichnet, dass** weitere Verbraucher direkt an das Verbindungskabel angeschlossen sind.

8. Anordnung nach Anspruch 6 oder 7, **dadurch gekennzeichnet, dass** weitere Verbraucher an der dem Verbindungskabel gegenüber liegenden Seite des Fahrzeugs mittels weiterer Kabel an das Verbindungskabel angeschlossen sind.

9. Anordnung nach einem der Ansprüche 1 bis 3, **dadurch gekennzeichnet, dass** je ein mehradriges Teil-Verbindungskabel entlang beider gegenüber liegender Längsseiten des Fahrzugs zu der Heckleuchtenanordnung geführt ist.

10. Anordnung nach Anspruch 9, **dadurch gekennzeichnet, dass** Markierungsleuchten entlang der Längsseiten des Fahrzeugs direkt an die Teil-Verbindungskabel angeschlossen sind.

11. Anordnung nach Anspruch 9 oder 10, **dadurch gekennzeichnet, dass** die beiden Teil-Verbindungskabel an entgegen gesetzten Seiten der Heckleuchtenanordnung angeschossen sind.

12. Anordnung nach einem der Ansprüche 9 bis 11, **dadurch gekennzeichnet, dass** wenigstens ein Teil der Adern der beiden Teil-Verbindungskabel mit identischen Funktionen belegt sind.

13. Anordnung nach Anspruch 12, **dadurch gekennzeichnet, dass** alle Adern der beiden Teil-Verbindungskabel mit identischen Funktionen belegt sind.

14. Anordnung nach Anspruch 12 oder 13, **dadurch gekennzeichnet, dass** die mit identischen Funktionen belegten Adern der beiden Teil-Verbindungskabel über die Heckleuchtenanordnung verbunden sind.

15. Anordnung nach einem der Ansprüche 12 bis 14, **dadurch gekennzeichnet, dass** wenigstens ein Teil der Adern mit identischer Funktion zu jeweils einer Leiterschleife elektrisch geschlossen sind.

16. Anordnung nach Anspruch 15, **dadurch gekennzeichnet, dass** Einrichtungen zur Überprüfung der Unversehrtheit der Leiterschleifen in einer Steuereinrichtung bei der Leistungsquelle vorgesehen sind.

17. Anordnung nach einem der Ansprüche 1 bis 16, **dadurch gekennzeichnet, dass** außer dem einzigen oder den zwei entlang der Längsseiten geführten Verbindungskabel keine weiteren Kabel zur Übertragung von Beleuchtungsleistung zwischen Leistungsquelle und Heckleuchtenanordnung vorhanden sind.

18. Anordnung nach einem der Ansprüche 1 bis 17, **dadurch gekennzeichnet, dass** bei Anschluss von weiteren Verbrauchern direkt oder über weitere Kabel nur ein Teil der Adern des oder der Verbindungskabel kontaktiert sind.

19. Anordnung nach einem der Ansprüche 1 bis 18. **dadurch gekennzeichnet, dass** das Verbindungskabel getrennte Adern für die Heck-Beleuchtungsfunktionen Rücklicht, Bremslicht, sowie für wenigstens einen von zwei Blinkern und für wenigstens eine aus beiden Beleuchtungsfunktionen Rückfahrscheinwerfer und Nebelschlussleuchte in sich vereint.

20. Kabelverbinder zur paarweisen Verbindung zumindest eines Teils der Adern zweier mehradriger isolierter Kabel mit Kabelaufnahmen zur Aufnahme beider Kabel in quer zu deren jeweiliger Längsrichtung definierter Position und mit je einem Brückenkontakt je zu verbindenden Aderpaar, wobei jeder Brückenkontakt zwei über eine Leiterbrücke verbundene, die zugeordneten Adern beider Kabel unter Durchdringen deren Isolierung kontaktierende Kontaktspitzen enthält und wobei
a) der Kabelverbinder ein Unterteil und ein mit diesem verbindbares Oberteil umfasst, zwischen welchem die Kabel einklemmbar sind,
b) wenigstens eines der beiden Teile wenigstens einen Brückenkontakt enthält und
c) die Leiterbrücke des Brückenkontaktes in elektrisch isolierendes Material eingebettet ist und die Kontaktspitzen in die Kabelaufnahmen ragen.

21. Kabelverbinder zur paarweisen Verbindung zumindest eines Teils der Adern zweier mehradriger isolierter Kabel mit Kabelaufnahmen zur Aufnahme beider Kabel in quer zu deren jeweiliger Längsrichtung definierter Position und mit je einem Brückenkontakt je zu verbindenden Aderpaar, wobei jeder Brückenkontakt zwei über Leiterbrücken verbundene, die zugeordneten Adern beider Kabel unter Durchdringen deren Isolierung kontaktierende Kontaktspitzen enthält und wobei
a) der Kabelverbinder ein Unterteil und ein mit diesem verbindbares Oberteil umfasst, zwischen welchem die Kabel einklemmbar sind,
b) wenigstens eines der beiden Teile wenigstens einen Brückenkontakt enthält und
c) der Brückenkontakt durch in die Kabelaufnahmen ragende Spitzen aus isolierendem Material und eine leitende Schicht auf diesen Spitzen und auf einem durchgehenden Oberflächenpfad zwischen zwei Spitzen gebildet ist.

22. Kabelverbinder nach Anspruch 21, **dadurch gekennzeichnet, dass** die leitende Schicht eine auf das isolierende Material aufgesinterte Schicht ist.

23. Kabelverbinder nach einem der Ansprüche 20 bis 22, **dadurch gekennzeichnet, dass** zumindest das wenigstens einen Brückenkontakt enthaltende Teil einen formstabilen Grundkörper aus einem ersten Material und einen dem Kabel zugewandten Einsatzkörper aus einem zweiten Material geringerer Härte aufweist.

24. Kabelverbinder nach Anspruch 23, **dadurch gekennzeichnet, dass** die Leiterbrücken zwischen Grundkörper und Einsatzkörper eingebettet sind und die Spitzen durch den Einsatzkörper in die Kabelaufnahme ragen.

25. Kabelverbinder nach Anspruch 23 oder 24, **dadurch gekennzeichnet, dass** das zweite Material eine Shore-Härte zwischen 70 und 85 aufweist.

26. Kabelverbinder nach einem der Ansprüche 23 bis 25, **dadurch gekennzeichnet, dass** das zweite Material ein thermoplastisches Elastomer ist.
